# EUROPÄISCHE PATENTANMELDUNG

(11) **EP 3 753 720 A1**
(43) Veröffentlichungstag der Anmeldung: **23.12.2020**
(21) Anmeldenummer: 20181148.6
(22) Anmeldetag: 19.06.2020
(51) Int. Cl.: B29C 70/54, B29C 70/38

(54) **VERFAHREN ZUM DREIDIMENSIONALEN ERFASSEN VON FASERMATERIAL MITTELS TERAHERTZSTRAHLUNG SOWIE FASERLEGEANLAGE HIERZU**

(30) Priorität: 20.06.2019 DE 102019116751
(71) Anmelder: Deutsches Zentrum für Luft- und Raumfahrt e.V., 53227 Bonn-Oberkassel (DE)
(72) Erfinder: Meister, Sebastian, 21680 Stade (DE)
(74) Vertreter: Gramm, Lins & Partner Patent- und Rechtsanwälte PartGmbB

(57) **Zusammenfassung**

Verfahren zum dreidimensionalen Erfassen mittels einer Erfassungsvorrichtung von einem auf einem Werkzeug abgelegten Fasermaterial eines Faserverbundwerkstoffes, der das Fasermaterial und ein das Fasermaterial einbettendes Matrixmaterial aufweist, wobei das Verfahren die folgenden Schritte umfasst:
- Emittieren einer elektromagnetischen Terahertz-Strahlung mittels mindestens einer Terahertz-Strahlungsquelle der Erfassungsvorrichtung in Richtung der Fasermaterialoberfläche des abgelegten Fasermaterials;
- Detektieren der von der Fasermaterialoberfläche reflektierten elektromagnetischen Terahertz-Strahlung mittels mindestens einem Terahertz-Strahlungsdetektor und Generieren von terahertzspezifischen Messdaten in Abhängigkeit von der detektierten reflektierten elektromagnetischen Terahertz-Strahlung; und
- Erstellen mindestens eines dreidimensionalen Messbildes in Abhängigkeit von den terahertzspezifischen Messdaten mittels einer Datenverarbeitungseinheit der Erfassungsvorrichtung.

## Beschreibung

Die Erfindung betrifft ein Verfahren zum dreidimensionalen Erfassen von auf einem Werkzeug abgelegten Fasermaterial eines Faserverbundwerkstoffes, der ein Fasermaterial und ein das Fasermaterial einbettendes Matrixmaterial aufweist, mittels einer Erfassungsvorrichtung. Die Erfindung betrifft ebenso eine Faserlegeanlage zum Ablegen von Fasermaterial hierzu.

Aufgrund der gewichtsspezifischen Festigkeit und Steifigkeit von Faserverbundbauteilen, die aus einem Faserverbundwerkstoff hergestellt werden, sind derartige Bauteile aus der Luft- und Raumfahrt sowie aus vielen weiteren Anwendungsgebieten, wie beispielsweise dem Automobilbereich, heutzutage kaum mehr wegzudenken. Bei der Herstellung eines Faserverbundbauteils wird dabei ein das Fasermaterial einbettendes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vor-gegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, durch den das trockene Fasermaterial mit dem Matrixmaterial imprägniert wird. Dies geschieht in der Regel aufgrund einer Druckdifferenz zwischen dem Matrixmaterial und dem Fasermaterial, indem beispielsweise das Fasermaterial mittels einer Vakuumpumpe evakuiert wird. Im Gegensatz hierzu sind auch Faserverbundwerkstoffe bekannt, bei denen das Fasermaterial mit dem Matrixmaterial bereits vorimprägniert ist (sogenannte Prepregs).

Vor dem Aushärten des Matrixmaterials wird in der Regel das Fasermaterial in ein Formwerkzeug eingebracht, das mit seiner formgebenden Werkzeugoberfläche die spätere Bauteilform nachbildet. Dabei können sowohl trockene als auch vorimprägnierte Fasermaterialien in das Formwerkzeug abgelegt bzw. eingebracht werden. Zur Herstellung von großskaligen Strukturbauteilen, wie beispielsweise Flügelschalen von Verkehrsflugzeugen oder Rotorblätter von Windkraftanlagen, werden zur Optimierung des Ablegeverfahrens automatisierte Faserablegeprozesse verwendet, bei denen mithilfe einer Fertigungsanlage und mindestens einem Faserlegekopf ein dem Faserlegekopf zugeführtes quasiendloses Fasermaterial auf dem Werk-zeug abgelegt wird. Bei der sogenannten Fiber Placement Technologie werden beispielsweise vorimprägnierte Fasermaterialien bahnweise auf dem Formwerkzeug mithilfe eines derartigen Faserlegekopfes abgelegt. Der Faserlegekopf ist dabei an einem Roboter angeordnet und kann gegenüber dem Formwerkzeug relativ verfahren bzw. bewegt werden. Hierdurch können die einzelnen Faserbahnen auf der Werkzeugoberfläche zuerst bahnweise und dann lagenweise abgelegt werden. Bei der Fiber Placement Technologie werden dabei gleichzeitig mehrere, meist 8, 16 oder 32 schmale Materialstreifen, sogenannte Tows, auf dem Werkzeug abgelegt. Im Gegensatz hierzu werden bei der Fiber Tape Laying Technologie meist breite Faserbahnen, auch Tapes genannt (in der Regel 150 mm, 300 mm oder 600 mm breit mit einer Dicke von wenigen Zehntel Millimeter), mithilfe des Faserlegekopfes auf dem Formwerkzeug abgelegt.

Eine solche automatisierte Faserlegeanlage ist beispielsweise aus der DE 10 2010 015 027 B1 bekannt, bei der auf einem umlaufenden Schienensystem mehrere Roboter geführt werden, die jeweils einen Ablegekopf als Endeffektor haben. Mittels einer Faserzuführung werden den Ablegeköpfen kontinuierlich Fasermaterial aus einem Fasermagazin zugeführt, während die einzelnen Roboter mit ihren Ablege-köpfen das ihnen zugeführte Fasermaterial auf einem in der Mitte des umlaufenden Schienensystems vorgesehenen Formwerkzeug ablegen. Mithilfe der Faserlegeköpfe werden somit in dem Formwerkzeug sogenannte Faserlaminate, auch Faserpreformen genannt, hergestellt, bei denen der Prozess des Infundierens des Matrixmaterials bzw. des Aushärtens des Matrixmaterials noch nicht stattgefunden hat. Derartige Faserlaminate bilden somit das Bauteil in einem Rohzustand vor dem Aushärten des Matrixmaterials ab.

Faserlaminate bzw. Faserpreformen für großskaligen Strukturbauteilen, wie beispielsweise Flügel oder Rotorblätter, bestehen nicht selten aus vielen Einzellagen, die je nach Anwendungsgebiet des Bauteils auch mehr als 100 Lagen umfassen können. Zur Gewährleistung einer hohen Bauteilqualität muss die Anzahl auftretender Prozessfehler bei der Ablage des Fasermaterials minimiert bzw. gänzlich verhindert werden. Das Auftreten von Prozessfehlern bzw. Fertigungsabweichungen mit großem negativen Einfluss auf die Festigkeit der Bauteilstruktur muss nach Möglichkeit vollständig im Prozess erkannt und wünschenswerter Weise auch unterbunden werden.

In der Praxis hat sich hierfür oftmals die manuelle Inspektion der Faserlaminate bzw. der Einzellagen etabliert. Je nach Bauteilgröße, Mitarbeiterverfügbarkeit und Fehlerhäufigkeit innerhalb einer Einzellagen werden im Mittel etwa 15 bis 30 Minuten benötigt, die Ablage einer einzigen Faserlage zu untersuchen. Da jedoch die Ablage einer einzelnen Faserlage in der Regel deutlich schneller mithilfe automatisierter Faserlegeanlagen durchgeführt werden kann, wird durch die manuelle Inspektion die Anlageneffizienz deutlich herabgesetzt. So werden bei der Herstellung von Flügelschalen für Kurzstreckenflugzeuge bis zu 400 Einzellagen benötigt, wo-raus sich aufgrund der manuellen Inspektion ein Anlagenstillstand von 6000 bis 12.000 Minuten pro Bauteil ergibt.

Ebenso ist die Inspektion durch einen geschulten Mitarbeiter stark vom Erfahrungsgrad abhängig und darüber hinaus nicht in dem Maße qualitativ ausreichend, wie es die Fertigungstoleranzen eigentlich erfordern. Als Beispiel ist ein zulässiger Abstand zwischen 2 Materialbahnen von 1 mm genannt, der qualitativ nur unter Verwendung von Hilfsmitteln und dies auch nur stichpunktartig untersucht werden kann.

Aus diesen Gründen ist eine automatisierte Untersuchung abgelegter Faserlagen zur Erkennung von Ablegefehlern wünschenswert, um sowohl qualitativ als auch quantitativ das Erkennen von Oberflächenfehlern abgelegter Fasermaterialien zu verbessern.

So ist aus der DE 10 2013 104 546 A1 ein Verfahren zum Erkennen von Fehlstellen von auf einer Werkzeugoberfläche abgelegten Faserhalbzeugen bekannt, wobei mithilfe eines Lichtprojektionsverfahrens, bei dem die Oberfläche mit Licht einer Lichtquelle aus einer ersten Richtung beleuchtet und das von der Oberfläche reflektierte Licht aus einer anderen, zweiten Richtung mit einer Kamera aufgenommen wird, ein Höhenprofil der Fasermaterialoberfläche in Abhängigkeit von den aufgenommenen Bilddaten der Kamera erzeugt wird. Anhand dieses Höhenprofils können nun Fehlstellen durch eine Bildauswertung in der Fasermaterialoberfläche erkannt werden.

Aus der DE 10 2013 112 260 A1 ist ebenfalls ein Verfahren zum Erkennen von Fehlstellen mithilfe eines Lichtprojektionsverfahrens bekannt, wobei hierbei die Fasermaterialoberfläche zusätzlich zu dem Licht der Lichtquelle des Lichtprojektionsverfahrens mittels einer Beleuchtungseinheit beleuchtet wird und anschließend zusätzlich zu dem Höhenprofil die Fehlstellen auch in Abhängigkeit einer Intensitätsverteilung des reflektierten Lichtes der Beleuchtungseinheit ermittelt werden.

Weiterhin ist aus der DE 10 2013 104 545 A1 ein Verfahren zum Erkennen von Fehlstellen mithilfe eines Lichtprojektionsverfahrens bekannt, wobei hierbei zusätzlich zu der Ermittlung des Höhenprofils die Werkzeugoberfläche oder die abgelegten Fasermaterialien temperiert und anschließend mit einer Thermokamera aufgenommen werden. Basierend auf den Thermographiebildern der Thermographiekamera sowie dem zugrunde liegenden Höhenprofil aus dem Lichtprojektionsverfahren können nun Fehlstellen auf der Fasermaterialoberfläche erkannt werden.

Des Weiteren ist aus der nachveröffentlichten DE 10 2018 124 079.1 ein Verfahren und eine Vorrichtung zum Ermitteln von Fehlstellen von Fasermaterialien bekannt, bei dem die Fasermaterialoberfläche von vorimprägnierten Fasermaterialien durch mindestens einen Bildsensor einer bildgebenden Aufnahmenvorrichtung in einem Wellenlängenspektrum außerhalb des sichtbaren Spektrums aufgenommen wird. In Abhängigkeit von auf dieser Basis generierten digitalen Bilddaten werden nun Fehlstellen an dem abgelegten, vorimprägnierten Fasermaterialien erkannt.

Aus der nachveröffentlichten DE 10 2019 112 312.7 ist ein Verfahren zum dreidimensionalen Erfassen einer Fasermaterialoberfläche eines Fasermaterials eines Faserverbundwerkstoffes bekannt, bei dem die Fasermaterialoberfläche mit mindestens zwei polarisationssensitiven Aufnahmesensoriken aufgenommen und aus den resultierenden Messdaten dann dreidimensionale Oberflächendaten der Fasermaterialoberfläche erstellt werden. Hieraus ergibt sich dann beispielsweise ein digitales, dreidimensionales Oberflächenmodell der zu erfassenden Fasermaterialoberfläche.

Aus der nachveröffentlichten DE 10 2019 112 317.8 ist ein Verfahren zum Erkennen von geometrischen Oberflächenfehlern einer Fasermaterialoberfläche bekannt, bei dem die Fasermaterialoberfläche mit verschiedenen elektromagnetischen Strahlungen unterschiedlicher Polarisation bestrahlt wird. Mithilfe einer Auswerteeinheit können dann aus den polarisationsabhängigen Messdaten, die von der Fasermaterialoberfläche aufgenommen wurden, geometrische Oberflächenfehler erkannt werden. Durch die Variation der Polarisation der emittierten Strahlung und den verschiedenen Winkeln der Bestrahlung können die reflektierten Strahlungen bzw. Reflexionen von der Materialoberfläche eindeutig einer Strahlungsquelle zugeordnet wer-den, wodurch es möglich wird, geometrische Inhomogenitäten auf der Materialoberfläche prozesssicher erkennen zu können und darüber hinaus gegebenenfalls den Fehler auch zu charakterisieren.

Nachteilig hierbei ist jedoch, dass ausschließlich Oberflächenfehler der Fasermaterialoberfläche erkannt werden können und Fehler innerhalb der Laminatebene unerkannt bleiben.

Vor diesem Hintergrund ist es Aufgabe der vorliegenden Erfindung ein verbessertes Verfahren sowie Vorrichtung zum Erfassen von Fasermaterial eines Faserverbundwerkstoffes anzugeben, mit dem sich auch Fehler in der Laminatebene bzw. chemische Defekte im Inneren einer Faserpreform erkennen lassen.

Die Aufgabe wird mit dem Verfahren gemäß Anspruch 1 sowie der Faserlegeanlage gemäß Anspruch 15 erfindungsgemäß gelöst. Vorteilhafte Ausgestaltungen der Erfindung finden sich in den entsprechenden Unteransprüchen.

Gemäß Anspruch 1 wird ein Verfahren zum dreidimensionalen Erfassen von einem auf einem Werkzeug abgelegten Fasermaterial eines Faserverbundwerkstoffes mittels einer Erfassungsvorrichtung vorgeschlagen. Der Faserverbundwerkstoff weist ein Fasermaterial und ein das Fasermaterial einbettendes Matrixmaterial auf, wobei zum Zeitpunkt des Durchführens des erfindungsgemäßen Verfahrens das Fasermaterial noch nicht mit dem Matrixmaterial infundiert bzw. imprägniert sein muss, es aber kann. Das Fasermaterial wird auf einem Werkzeug zur Bildung einer einlagigen oder mehrlagigen Faserpreform, auch Faserlaminat genannt, abgelegt. Erfindungsgemäß ist dabei vorgesehen, dass zumindest ein Teil des abgelegten Fasermaterials mittels einer elektromagnetischen Terahertzstrahlung gescannt und anschließend daraus dann mindestens eine dreidimensionale Messbild mittels einer Datenverarbeitungseinheit erstellt wird. Ein Vorteil der Terahertz-Technologie ist die geringe Dämpfung von Kunststoffen für diesen Wellenlängenbereich. Dabei hat sich überraschend gezeigt, dass mit der Terahertz-Technologie abgelegtes Fasermaterial einer Faserpreform in Dickenrichtung inspiziert und intralaminare Defekte hierdurch automatisiert erkannt werden können.

Hierfür ist erfindungsgemäß vorgesehen, dass mithilfe mindestens einer Terahertz-Strahlungsquelle eine elektromagnetische Terahertzstrahlung in Richtung der Fasermaterialoberfläche des abgelegten Fasermaterials emittiert wird. Terahertzstrahlung, auch Submillimeterwellen genannt, ist eine elektromagnetische Strahlung und liegt im elektromagnetischen Spektrum zwischen der Infrarotstrahlung und den Mikrowellen, d. h. bei einer Wellenlänge zwischen 100 µm und 1 mm.

Diese so emittierte elektromagnetische Terahertzstrahlung trifft nun auf die Fasermaterialoberfläche des abgelegten Fasermaterials und wird von dieser reflektiert. Diese Reflexion der elektromagnetischen Terahertzstrahlung wird dann von mindestens einem Terahertz-Strahlungsdetektor detektiert, wobei terahertzspezifische Messdaten in Abhängigkeit von der detektierten reflektierten elektromagnetischen Terahertzstrahlung generiert werden.

Basierend auf diesen so generierten terahertzspezifischen Messdaten wird nun mindestens ein dreidimensionales Messbild mittels einer Datenverarbeitungseinheit erstellt, welches für jeden Messpunkt auf der Fasermaterialoberfläche des abgelegten Fasermaterials eine Information über die Beschaffenheit des Fasermaterials, des Faserlaminates und/oder des Matrixmaterials des Faserverbundwerkstoffes beinhaltet. Insbesondere Delaminationen können aus dem dreidimensionalen Messbild automatisiert erkannt werden.

Hierdurch wird es möglich, durch die geschlossene Oberfläche des Fasermaterials in das Innere einer Faserablage zu messen bzw. zu schauen und somit Informationen über den inneren Aufbau einer Faserablage zu erhalten. Hierdurch lassen sich basierend auf diesen geometrischen Tiefendaten insbesondere Fehler im Laminataufbau, Fehler im Fasermaterial an sich sowie Abweichungen der chemischen Beschaffenheit des Materials bzw. einer speziellen Schicht ableiten.

Gemäß einer Ausführungsform ist vorgesehen, dass das mindestens eine erstellte dreidimensionale Messbild in einem digitalen Datenspeicher hinterlegt wird. Dadurch können die erstellten dreidimensionalen Messbilder zu Dokumentationszwecken aufbewahrt, zu einem späteren Zeitpunkt manuell analysiert oder mittels einer Auswerteeinheit, wie später noch gezeigt, automatisiert untersucht werden.

Gemäß einer weiteren Ausführungsform ist vorgesehen, dass für jeden Messpunkt der Fasermaterialoberfläche die Rückstrahlintensität der reflektierten Terahertzstrahlung detektiert wird, wobei terahertzspezifischen Messdaten in Abhängigkeit von der jeweils detektierten Rückstrahlintensität generiert werden. Vorteilhafterweise lassen sich sodann für jeden Messpunkt aus der Rückstrahlintensität der terahertzspezifischen Messdaten ein Helligkeitswert und/oder ein Farbwert generieren, wobei das mindestens eine dreidimensionale Messbild in Abhängigkeit von den generierten Helligkeitswerten und/oder Farbwerten erstellt wird.

Hierdurch lassen sich die dreidimensionalen Messbilder in Form von Falschfarbenbilder erstellen, wobei die Basis der dargestellten Falschfarben für jeden Messpunkt die Rückstrahlintensität ist. Überraschend wurde hierbei erkannt, dass sich bei einer derartigen Darstellung der Terahertz-Rückstrahlintensität einer elektromagnetischen Terahertzstrahlung ein entsprechende Eigenschaft oder Beschaffenheit des Fasermaterials oder des Matrixmaterials oder des Faserlaminates erkennen lässt, wodurch insbesondere Fehlstellen einfach und schnell detektierbar werden, die sich im Inneren des Faserlagenaufbaus befinden.

Gemäß einer Ausführungsform ist vorgesehen, dass Fehlstellen des Fasermaterials und/oder des aus dem Fasermaterial gebildeten Faserlaminates in Abhängigkeit von dem mindestens einen dreidimensionalen Messbild mittels einer Auswerteeinheit erkannt werden. So ist es denkbar, dass mittels einer Bildauswertung bzw. Bilderkennung entsprechende Fehlstellen des Fasermaterials bzw. des Faserlaminates aus dem mindestens einen dreidimensionalen Messbild automatisiert erkannt werden, sodass fehlerhafte Bauteile, deren Fehlstellen auch durch eine manuelle Untersuchung nicht erkennbar sind, frühzeitig erkannt werden können.

Der Erfinder hat dabei erkannt, dass mithilfe der Terahertz-Technologie und den hieraus erstellten dreidimensionalen Messbildern entsprechende Fehlstellen innerhalb des Fasermaterials erkennbar sind, und zwar in einer Genauigkeit, die es ermöglicht, Fehlstellen prozesssicher zu erkennen und innerhalb des Faserlaminates zu lokalisieren.

Derartige Fehler bzw. Fehlstellen können beispielsweise Stufen, Überlappungen, Verwerfungen, Welligkeiten, Lufteinschlüsse, Fremdkörper, Materialablösungen, Materialansammlungen, Materialfehler, Fehler auf Laminatebene und/oder chemi-sche Defekte sein. Es hat sich gezeigt, dass derartige Fehlstellen mithilfe der Terahertz-Technologie innerhalb des Fasermaterials bzw. der Faserlaminatebene sowie auf der Oberfläche des Fasermaterials erkennbar sind.

Gemäß einer weiteren Ausführungsform ist vorgesehen, dass Eigenschaften des Faserverbundwerkstoffes, d.h. Eigenschaften des Fasermaterials und/oder des Matrixmaterials, in Abhängigkeit von dem mindestens einen dreidimensionalen Messbild mittels einer Auswerteeinheit erkannt werden.

Derartige Eigenschaften des Faserverbundwerkstoffes, die mithilfe der Terahertz-Technologie erkannt werden können, sind beispielsweise ein Porengehalt, ein Kristallisationsgrad, ein Lagenaufbau, ein Konsolidierungsgrad eines das Fasermaterial einbettenden Matrixmaterials (beispielsweise ein thermoplastisches Matrixmaterial) und/oder eine Permeabilität des Fasermaterials.

Gemäß einer Ausführungsform ist vorgesehen, dass während des Emittierens der elektromagnetischen Teraherzstrahlung die mindestens eine Terahertz-Strahlungsquelle der Erfassungsvorrichtung und/oder der mindestens eine Terahertz-Strahlungsdetektor gegenüber dem abgelegten Fasermaterial bewegt bzw. verfahren wird. Alternativ oder zusätzlich kann auch vorgesehen sein, dass das abgelegte Fasermaterial gegenüber der mindestens einen Terahertz-Strahlungsquelle und/oder dem mindestens einen Terahertz-Strahlungsdetektor während des Emittierens der Terahertzstrahlung bewegt wird. Somit kann die gesamte Fläche des Fasermaterials, welches auf dem Werkzeug abgelegt ist, erfasst werden, um ein vollständiges Bild durch mindestens ein dreidimensionales Messbild der Fasermaterialoberfläche zu erhalten.

Gemäß einer Ausführungsform ist vorgesehen, dass während des Detektierens der reflektierten elektromagnetischen Terahertzstrahlung von der Fasermaterialoberfläche des abgelegten Fasermaterials der mindestens eine Terahertz-Strahlungsdetektor gegenüber dem abgelegten Fasermaterial bewegt bzw. verfahren wird. Alternativ oder zusätzlich kann auch vorgesehen sein, dass das abgelegte Fasermaterial gegenüber dem mindestens einen Terahertz-Strahlungsdetektor bewegt wird.

Gemäß einer Ausführungsform ist vorgesehen, dass die emittierte elektromagnetische Terahertzstrahlung durch mindestens einen beweglichen Spiegel abgelenkt wird, wobei während des emittieren der elektromagnetischen Terahertzstrahlung der mindestens eine Spiegel bewegt wird. Hierdurch kann an ein und derselben Position der Terahertz-Strahlungsquelle in Bezug auf die Fasermaterialoberfläche eine Vielzahl von Messpunkten auf der Fasermaterialoberfläche erreicht werden, da durch den beweglichen Spiegel die Terahertzstrahlung in Richtung der verschiedenen Messpunkte abgelegt werden kann. Hierdurch können beispielsweise linienförmige Messbereich erzeugt werden.

Gemäß einer vorteilhaften Ausführungsform hierzu ist vorgesehen, dass die mindestens eine Terahertz-Strahlungsquelle und/oder der mindestens eine Terahertz-Strahlungsdetektor zusammen mit einem Faserlegekopf einer Faserlegeanlage während des Ablegens des Fasermaterials gegenüber dem bereits abgelegten Fasermaterial bewegt wird. Hierbei wurde erkannt, dass eine solche Terahertz-Strahlungsquelle und/oder ein solcher Terahertz-Strahlungsdetektor insbesondere im Nachlauf eines Faserlegekopfes angeordnet werden kann, wobei entsprechende terahertzspezifische Messdaten während des Ablegens des Fasermaterials durch den Faserlegekopf erfasst werden können. Somit können während der Faserablage lagenweise dreidimensionale Messbilder für jede Faserlaminatebene erzeugt werden, wodurch sich ein vollständiges dreidimensionales Bild des gesamten Faserlaminates ergibt.

Der Erfinder hat dabei erkannt, dass das erfindungsgemäße Verfahren während des automatisierten, kontinuierlichen Ablegens von Fasermaterial auf einer Werk-zeugoberfläche durchführbar ist, um das abgelegte Fasermaterial dreidimensional zu erfassen.

Gemäß einer Ausführungsform hierzu ist vorgesehen, dass in Abhängigkeit von einer Auswertung des mindestens einen dreidimensionalen Messbildes mittels einer Auswerteeinheit ein oder mehrere Legeparameter der Faserlegeanlage zur Ablage des Fasermaterials angepasst werden. Solche Legeparameter der Faserlegeanlage, die basierend auf dem mindestens einen Messbild angepasst werden sollen, können beispielsweise die Anpresskraft, die Heizleistung und/oder die Verfahrgeschwindigkeit sein. Hierdurch wird es möglich, im Ablegeprozess selber auf Abweichungen (in Bezug auf einen vorgegebenen Soll-Zustand) der Faserablage zu reagieren, um so das Auftreten von nicht mehr zu korrigierenden Fehlstellen zu verhindern. Hierdurch lässt sich die Prozesszeit bei der Herstellung großskaliger Strukturbauteilen verkürzen und gleichzeitig die Qualität der herzustellenden Bauteile erhöhen.

Die Aufgabe wird im Übrigen auch mit der Faserlegeanlage zum Ablegen von Fasermaterial eines Faserverbundwerkstoffes auf einem Werkzeug zur Herstellung eines Faserverbundbauteils gemäß Anspruch 15 gelöst, wobei die Faserlegeanlage eine Erfassungsvorrichtung zum dreidimensionalen Erfassen des abgelegten Fasermaterials und zur Durchführung des vorstehend beschriebenen Verfahrens ausgebildet ist.

Gemäß einer Ausführungsform ist dabei vorgesehen, dass die Faserlegeanlage mindestens einen Roboter hat, an dem als Endeffektor ein Faserlegekopf zum kontinuierlichen Ablegen von Fasermaterial vorgesehen ist, wobei die mindestens eine Terahertz-Strahlungsquelle und/oder der mindestens eine Terahertz-Strahlungsdetektor der Erfassungsvorrichtung an dem Faserlegekopf angeordnet sind.

Die Erfindung wird anhand der beigefügten Figuren beispielhaft näher erläutert. Es zeigen:
- Figur 1: schematische Darstellung einer Faserlegeanlage mit der erfindungsgemäßen Erfassungsvorrichtung;
- Figur 2: schematische Aufbau eines bildgebenden Terahertzsensors;
- Figur 3: beispielhafte Darstellung eines Scanvorgangs;
- Figur 4: beispielhafte Abbildung eines dreidimensionalen Messbildes von fehlerfreien und fehlerbehafteten Bauteilbereichen.

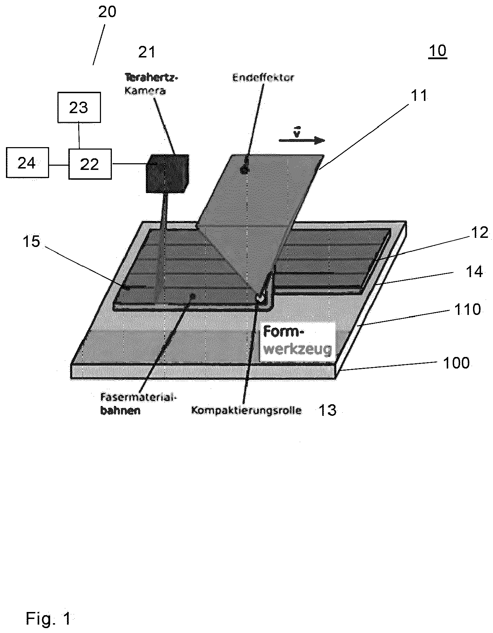

Figur 1 zeigt in einer schematisch stark vereinfachten Darstellung eine Faserlegeanlage 10, die einen Faserlegekopf 11 als Endeffektor eines nicht dargestellten Roboters hat. Dem Faserlegekopf 11 der Faserlegeanlage 10 wird dabei kontinuierlich ein bandförmige, quasiendloses Fasermaterial 12 zugeführt, dass mittels einer Kompaktierungsrolle 13 das dem Faserlegekopf 11 zugeführte Fasermaterial 12 auf eine formgebende Werkzeugoberfläche 110 eines Formwerkzeuges 100 ablegt.

Wie schematisch angedeutet, wird das Fasermaterial 12 nebeneinander und gegebenenfalls dann auch lagenweise übereinander abgelegt, um so die Faserpreform bzw. das Faserlaminat in dem Formwerkzeug 100 herzustellen.

Erfindungsgemäß ist nun im Nachlauf des Faserlegekopfes 11 mindestens ein Terahertzsensor 21 einer Erfassungsvorrichtung 20 angeordnet, der in Richtung der abgelegten Fasermaterialienoberfläche 15 des abgelegten Fasermaterials 14 ausgerichtet ist. Der Terahertzsensor 21 emittiert mittels mindestens einer Terahertz-Strahlungsquelle eine Terahertzstrahlung in Richtung der Fasermaterialoberfläche 15 und nimmt die von der Fasermaterialoberfläche 15 reflektierte Terahertzstrahlung mittels eines Terahertz-Strahlungsdetektors auf. Mithilfe des Terahertzsensors 21 können Tiefendaten mit einer Tiefe von wenigen Zentimetern (beispielsweise 4 bis 5 cm) erfasst werden.

Da der Terahertzsensor 21 fest an dem Faserlegekopf 11 angeordnet ist, wird beim Ablegen des Fasermaterials 12 durch Bewegen des Faserlegekopfes 11 auch der Terahertzsensor 21 gegenüber der Fasermaterialoberfläche 15 des bereits abgelegten Fasermaterials 14 verfahren. Dadurch können an einer Vielzahl von Oberflächenpositionen bzw. Messpunkten jeweils terahertzspezifische Messdaten durch den Terahertzsensor 21 generiert werden, die dann schließlich zu dem dreidimensionalen Messbild zusammengesetzt werden.

Hierzu weist die Erfassungsvorrichtung 20 eine Datenverarbeitungseinheit 22 auf, die mit dem Terahertzsensor 21 signaltechnisch in Verbindung steht und aus den terahertzspezifischen Messdaten dann das dreidimensionale Messbild erzeugt.

Dieses so von der Datenverarbeitungseinheit 22 erzeugte Messbild kann in einem digitalen Datenspeicher 23 dauerhaft hinterlegt werden.

Des Weiteren weist die Erfassungsvorrichtung 20 eine Auswerteeinheit 24 auf, die eingerichtet ist, in Abhängigkeit von dem dreidimensionalen Messbild entsprechende Fehlstellen oder Fasermaterialeigenschaften des Fasermaterials erkennen zu können. Es ist somit möglich, durch eine geschlossene Oberfläche in das Innere einer Faserablage zu messen. Hieraus können sowohl geometrisch Tiefendaten wie auch die chemische Beschaffenheit eines Materials bzw. einer speziellen Schicht abgeleitet werden. Somit ist es möglich, den Porengehalt, Kristallisationsgrad, Lagenaufbau, Welligkeiten, etc. direkt im Faserlegeprozess zu messen und entsprechend reagieren zu können. Es wird auch möglich, den Konsolidierungsprozess für die Verarbeitung von thermoplastischen Matrixmaterialien oder die Permeabilität einer Trockenfasermaterialablage zu überwachen.

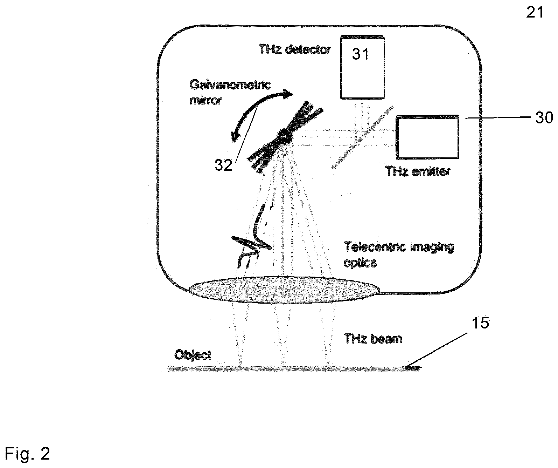

Figur 2 zeigt schematisch stark vereinfacht den Aufbau des bildgebenden Terahertzsensors 21. Der Terahertzsensor 21 hat einen Terahertz-Strahlungsquelle 30, die zum Emittieren einer elektromagnetischen Terahertzstrahlung ausgebildet ist. Des Weiteren hat der Terahertzsensor 21 einen Terahertz-Strahlungsdetektor 31, der zum Detektieren von einer elektromagnetischen Terahertzstrahlung ausgebildet ist.

Die Terahertz-Strahlungsquelle 30 emittiert dabei die elektromagnetische Terahertzstrahlung in Richtung eines rotatorisch bewegbaren Spiegels 32, der die emittierte elektromagnetische Terahertzstrahlung in Richtung der Fasermaterialoberfläche 15 ablenkt. Die von der Fasermaterialoberfläche 15 reflektierte Terahertzstrahlung und dann über den rotatorisch bewegbaren Spiegels 32 zu dem Terahertz-Strahlungsdetektor 31 geleitet, wo sie detektiert und die terahertzspezifischen Messdaten generiert werden.

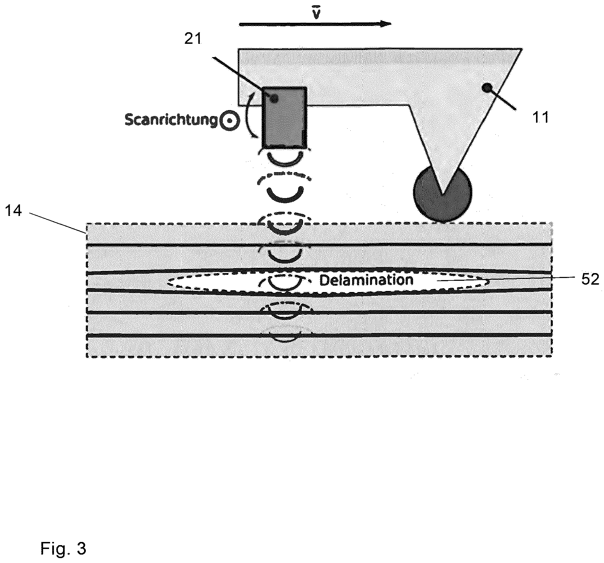

Figur 3 zeigt schematisch vereinfacht den Ablegekopf 11, der einen Terahertzsensor 21 im Nachlauf hat. Dieser emittiert eine elektromagnetische Terahertzstrahlung in Richtung des aus abgelegten Fasermaterial gebildeten Faserlaminates und erfasst die von dem Faserlaminat reflektierte elektromagnetische Terahertzstrahlung. Basierend auf der Rückstrahlintensität an verschiedenen Messpunkten ergeben sich sodann Hinweise auf entsprechende Fehlstellen innerhalb des Faserlaminates, die in Figur 3 beispielhaft in Form einer Delaminationen dargestellt ist.

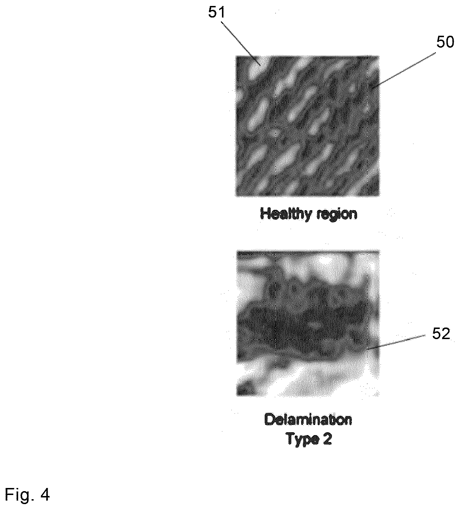

Das aus dem Terahertzscan resultierende dreidimensionale Messbild ist dabei beispielhaft in Figur 4 für einen fehlerfreien Bauteilbereich (oberes Bild) und einen fehlerbehafteten Bauteilbereich (unteres Bild) abgebildet. Wie im oberen Bild mit dem fehlerfreien Bauteilbereich erkennbar ist, kann das gleichmäßig verteilte Matrixmaterial 50 sehr gut von den übrigen Bestandteilen 51 abgegrenzt werden. Im unteren Bild hingegen befindet sich eine große Ansammlung von Matrixmaterial 52, was auf eine Delaminationen im Laminataufbau hinweist.

Es wird demzufolge mithilfe der vorliegenden Erfindung möglich, derartige Fehlstellen innerhalb eines Laminataufbaus festzustellen, die mit bloßem Auge nicht zu erkennen sind. Darüber hinaus wird es mit der vorliegenden Erfindung möglich, bereits während der Faserablage einen entsprechenden Scan des bereits hergestellten Faserlaminates durchzuführen, wodurch Fehlstellen sehr frühzeitig erkannt und gegebenenfalls noch behoben werden können. Außerdem kann so der Aufbau des Faserlaminates dokumentiert werden.

### Bezugszeichenliste

- 10: Faserlegeanlage
- 11: Faserlegekopf
- 12: Fasermaterial
- 13: Kompaktierungsrolle
- 14: abgelegtes Fasermaterial
- 15: Oberfläche des abgelegten Fasermaterials
- 20: Erfassungsvorrichtung
- 21: Terahertzsensor
- 22: Datenverarbeitungseinheit
- 23: digitaler Datenspeicher
- 24: Auswerteeinheit
- 30: Terahertz-Strahlungsquelle
- 31: Terahertz-Strahlungsdetektor
- 32: rotatorisch bewegbarer Spiegel
- 50: fehlerfreie Matrixbereiche
- 51: übrige Materialbereiche
- 52: fehlerbehafteter Matrixbereich
- 100: Formwerkzeug
- 110: formgebende Werkzeugoberfläche

## Patentansprüche

1. Verfahren zum dreidimensionalen Erfassen mittels einer Erfassungsvorrichtung (20) von einem auf einem Werkzeug (100) abgelegten Fasermaterial (14) eines Faserverbundwerkstoffes, der das Fasermaterial (12) und ein das Fasermaterial (12) einbettendes Matrixmaterial aufweist, wobei das Verfahren die folgenden Schritte umfasst:
- Emittieren einer elektromagnetischen Terahertz-Strahlung mittels mindestens einer Terahertz-Strahlungsquelle (30) der Erfassungsvorrichtung (20) in Richtung der Fasermaterialoberfläche (15) des abgelegten Fasermaterials (14);
- Detektieren der von der Fasermaterialoberfläche (15) reflektierten elektromagnetischen Terahertz-Strahlung mittels mindestens einem Terahertz-Strahlungsdetektor (31) und Generieren von terahertzspezifischen Messdaten in Abhängigkeit von der detektierten reflektierten elektromagnetischen Terahertz-Strahlung; und
- Erstellen mindestens eines dreidimensionalen Messbildes in Abhängigkeit von den terahertzspezifischen Messdaten mittels einer Datenverarbeitungseinheit (22) der Erfassungsvorrichtung (20).

2. Verfahren nach Anspruch 1, **dadurch gekennzeichnet, dass** das mindestens eine erstellte dreidimensionale Messbild in einem digitalen Datenspeicher (23) hinterlegt wird.

3. Verfahren nach Anspruch 1 oder 2, **dadurch gekennzeichnet, dass** für jeden Messpunkt der Fasermaterialoberfläche (15) die Rückstrahlintensität der reflektierten Terahertz-Strahlung detektiert wird, wobei die terahertzspezifischen Messdaten in Abhängigkeit von der detektierten Rückstrahlintensität generiert werden.

4. Verfahren nach Anspruch 3, **dadurch gekennzeichnet, dass** für jeden Messpunkt aus der Rückstrahlintensität der terahertzspezifischen Messdaten ein Helligkeitswert und/oder ein Farbwert generiert wird, wobei das mindestens eine dreidimensionale Messbild in Abhängigkeit von den generierten Helligkeitswerten und/oder Farbwerten erstellt wird.

5. Verfahren nach einem der vorhergehenden Ansprüche, **dadurch gekennzeichnet, dass** Fehlstellen des Fasermaterials (12) und/oder eines aus dem Fasermaterial (12) gebildeten Faserlaminates in Abhängigkeit von dem mindestens einen erstellten dreidimensionalen Messbildes mittels einer Auswerteeinheit (24) erkannt werden.

6. Verfahren nach Anspruch 5, **dadurch gekennzeichnet, dass** Stufen, Überlappungen, Spalten, Verwerfungen, Welligkeiten, Lufteinschlüsse, Fremdkörper, Materialablösungen, Delaminationen, Materialansammlungen, Materialfehler, Fehler auf Laminatebene und/oder chemische Defekte als Fehlstellen erkannt werden.

7. Verfahren nach einem der vorhergehenden Ansprüche, **dadurch gekennzeichnet, dass** Eigenschaften des Faserverbundwerkstoffes in Abhängigkeit von dem mindestens einen erstellten dreidimensionalen Messbildes mittels einer Auswerteinheit (24) erkannt werden.

8. Verfahren nach Anspruch 7, **dadurch gekennzeichnet, dass** ein Porengehalt, ein Kristallisationsgrad, ein Lagenaufbau, ein Konsolidierungsgrad des das Fasermaterial (12) einbettenden Matrixmaterials und/oder eine Permeabilität des Fasermaterials (12) als Eigenschaft des Faserverbundwerkstoffes erkannt werden.

9. Verfahren nach einem der vorhergehenden Ansprüche, **dadurch gekennzeichnet, dass** während des Emittierens der elektromagnetischen Terahertz-Strahlung in Richtung der Fasermaterialoberfläche (15) des abgelegten Fasermaterials (14) die mindestens eine Terahertz-Strahlungsquelle (30) gegenüber dem abgelegten Fasermaterial (14) verfahren wird und/oder dass das abgelegte Fasermaterial (14) gegenüber der mindestens einen Terahertz-Strahlungsquelle (30) bewegt wird.

10. Verfahren nach einem der vorhergehenden Ansprüche, **dadurch gekennzeichnet, dass** während des Detektierens der reflektierten elektromagnetischen Terahertz-Strahlung von der Fasermaterialoberfläche (15) des abgelegten Fasermaterials (14) der mindestens eine Terahertz-Strahlungsdetektor (31) gegenüber dem abgelegten Fasermaterial (14) verfahren wird und/oder dass das abgelegte Fasermaterial (14) gegenüber dem mindestens einen Terahertz-Strahlungsdetektor (31) bewegt wird.

11. Verfahren nach einem der vorhergehenden Ansprüche, **dadurch gekennzeichnet, dass** die emittierte elektromagnetische Terahertz-Strahlung durch mindestens einen beweglichen Spiegel (32) abgelegt wird, wobei während des Emittierens der elektromagnetische Terahertz-Strahlung der mindestens eine Spiegel (32) bewegt wird.

12. Verfahren nach einem der vorhergehenden Ansprüche, **dadurch gekennzeichnet, dass** die mindestens eine Terahertz-Strahlungsquelle (30) und/oder der mindestens eine Terahertz-Strahlungsdetektor (31) der Erfassungsvorrichtung (20) zusammen mit einem Faserlegekopf (11) einer Faserlegeanlage (10) während des Ablegens des Fasermaterials (12) gegenüber dem bereits abgelegten Fasermaterial (14) bewegt wird.

13. Verfahren nach Anspruch 12, **dadurch gekennzeichnet, dass** in Abhängigkeit von einer Auswertung des mindestens einen dreidimensionalen Messbildes mittels einer Auswerteeinheit (24) ein oder mehrere Legeparameter der Faserlegeanlage (10) angepasst werden.

14. Verfahren nach Anspruch 13, **dadurch gekennzeichnet, dass** die Anpresskraft, die Heizleistung und/oder die Verfahrgeschwindigkeit als Legeparameter der Faserlegeanlage (10) angepasst werden.

15. Faserlegeanlage (10) zum Ablegen von Fasermaterial (12) eines Faserverbundwerkstoffes, der ein Fasermaterial (12) und ein das Fasermaterial (12) einbettendes Matrixmaterial aufweist, auf ein Werkzeug (100) zur Herstellung eines Faserverbundbauteils, **dadurch gekennzeichnet, dass** die Faserlegeanlage (10) eine Erfassungsvorrichtung (20) zum dreidimensionalen Erfassen des abgelegten Fasermaterials (14) hat und zur Durchführung des Verfahrens nach einem der Ansprüche 1 bis 14 ausgebildet ist.

16. Faserlegeanlage (10) nach Anspruch 15, **dadurch gekennzeichnet, dass** die Faserlegeanlage (10) mindestens einen Roboter hat, an dem als Endeffektor ein Faserlegekopf (11) zum kontinuierlichen Ablegen von Fasermaterial (12) vorgesehen ist, wobei die mindestens eine Terahertz-Strahlungsquelle (30) und/oder der mindestens eine Terahertz-Strahlungsdetektor (31) der Erfassungsvorrichtung (20) an dem Faserlegekopf (11) angeordnet ist.
